# FASCICULE DE BREVET EUROPEEN

(11) **EP 2 064 161 B1**
(45) Date de publication et mention de la délivrance du brevet: **07.06.2017**
(21) Numéro de dépôt: 07803559.9
(22) Date de dépôt: 20.09.2007
(51) Int. Cl.: C04B 24/40, C04B 28/14, G09F 3/02, C04B 111/80

(54) **PROCEDE DE MARQUAGE D'UN MATERIAU COMPRENANT AU MOINS UNE MATRICE MINERALE ET MATERIAU CORRESPONDANT**
VERFAHREN ZUM MARKIEREN EINES MATERIALS MIT MINDESTENS EINER NICHTORGANISCHEN MATRIX UND ENTSPRECHENDES MATERIAL
METHOD FOR LABELLING A MATERIAL COMPRISING AT LEAST ONE NON-ORGANIC MATRIX AND CORRESPONDING MATERIAL

(30) Priorité: 21.09.2006 FR 0608294
(43) Date de publication de la demande: 03.06.2009
(73) Titulaire: INSTITUT NATIONAL DES SCIENCES APPLIQUEES DE RENNES, 35043 Rennes Cedex (FR)
(72) Inventeur: GUILLOU, Olivier, 35510 Cesson-Sevigne (FR); DAIGUEBONNE, Carole, 35510 Cesson-Sevigne (FR); KERBELLEC, Nicolas, 56300 Pontivy (FR)
(74) Mandataire: Vidon Brevets & Stratégie
(86) Numéro de dépôt international: PCT/EP2007/059946
(87) Numéro de publication internationale: WO 2008/034865

(56) Documents cités:
- WO-A-2004/039913
- WO-A-2005/020194
- DE-A1- 19 802 588
- US-A- 5 756 224

## Description

Le domaine de l'invention est celui de la conception et de la réalisation des matériaux.

Plus précisément, l'invention concerne les matériaux comprenant une matrice minérale et notamment, mais non exclusivement, les matériaux de construction résistant au feu utilisés dans le cadre de la protection incendie.

Des catastrophes récentes, notamment celles des tours jumelles de New-York et du tunnel du Mont Blanc en France, ont fait prendre conscience de l'importance de l'utilisation de tels matériaux anti-feu.

Ces matériaux qui, outre une matrice minérale, contiennent différents composés dont des composés retardateurs de feu, sont de plus en plus efficaces.

Les entreprises qui fabriquent et/ou commercialisent ces matériaux anti-feu auprès des constructeurs engagent leur responsabilité quant aux dommages pouvant résulter de la mise à l'épreuve de ceux-ci. Dans ce cadre, ils doivent pouvoir prouver, en cas de besoin, que le matériau effectivement utilisé par le constructeur pour une construction considérée est bien le leur ou, le cas échéant ne l'est pas.

Ce problème peut également se poser pour d'autres types de matériaux à matrice minérale que les matériaux anti-feux, tels que notamment les bétons utilisés dans le cadre de constructions de haute technicité telles que les ouvrages d'art.

Il existe donc un besoin élevé pour pouvoir organiser la traçabilité de tels matériaux à matrice minérale.

L'invention s'inscrit dans ce contexte et a pour objectif de proposer une technique de marquage des matériaux à base d'au moins une matrice minérale en vue de leur éventuelle identification ultérieure.

L'invention a également pour objectif de fournir une telle technique qui préserve intactes, ou quasiment, les propriétés dudit matériau.

Un autre objectif de l'invention est de fournir une telle technique qui permette de réaliser une mise en évidence du marquage par des techniques simples.

L'invention a encore pour objectif de fournir une telle technique qui soit simple de conception, facile et peu coûteuse à mettre en oeuvre.

Ces objectifs, ainsi que d'autres qui apparaîtront par la suite, sont atteints grâce à l'invention qui a pour objet un procédé de marquage d'au moins un matériau comprenant une matrice minérale selon la revendication 1.

WO2005/020194A divulgue une composition polymérique luminescente comprenant au moins un polymère complexé avec au moins un ion lanthanide luminescent utilisée pour marquer des matériaux plastiques. Ce polymère ne se présente pas sous la forme de cristallite et n'est pas proposé pour marquer une matrice minérale.

Les composés selon l'invention constituent donc des traceurs permettant de marquer tout matériau à base d'une matrice minérale et de permettre l'identification ultérieure dudit matériau même après un temps long d'utilisation.

De tels traceurs présentent un réel intérêt pour les matériaux dans la mesure où l'utilisation d'ions de terres rares est originale dans le domaine du bâtiment et dans la mesure ou leur présence est facilement détectable, grâce par exemple à une simple lampe émettant des radiations ultraviolettes.

De plus, ces composés sont suffisamment luminescents sous UV pour pouvoir être utilisés en très faibles concentrations afin d'être détectés, par spectrophotométrie ou même, le cas échéant, à l'oeil nu. Ceci permet de limiter le coût du procédé, mais permet aussi de ne pas modifier les propriétés, notamment rhéologiques, mécaniques ou thermiques du matériau.

Ils sont de plus résistants aux températures élevées ce qui les rend utilisables pour le marquage des produits de protection incendie.

Ils sont aussi chimiquement suffisamment inertes pour que leur introduction dans la matrice ne pose pas de problème de compatibilité avec d'autres composés présents dans les matériaux présentant une matrice minérale.

Par ailleurs, ces composés sont aisés à mettre en évidence dans le cadre d'un contrôle de routine, puisqu'ils sont luminescents sous irradiation UV.

Enfin, ils présentent l'avantage d'être invisible en l'absence de rayonnement UV, une fois inclus dans le matériau.

On rappelle que les lanthanides comprennent le lanthane (La), le cérium (Ce), le praséodyme (Pr), le néodyme (Nd), le prométhium (Pm), le samarium (Sm), l'europium (Eu), le gadolinium (Gd), le terbium (Tb), le dysprosium (Dy), l'holmium (Ho), l'erbium (Er), le thulium (Tm), l'ytterbium (Ub) et le lutétium (Lu) et que les terres rares comprennent ces éléments plus le scandium (Sc) et l'yttrium (Y).

Ces terres rares sont, contrairement à leur appellation, assez répandues dans l'écorce terrestre, à l'égal des métaux usuels. Ils sont, la plupart du temps, présents simultanément dans les minerais tel que la bastnasite, la monazite, la loparite (niobiotitanate), l'apatite, le xénotime (orthophosphate) et les argiles latéritique.

Sous forme élémentaire, les terres rares ont un aspect métallique et sont assez tendres, malléables et ductiles.

Les transitions électroniques pour les terres rares se situent entre niveaux discrets et cela se traduit par des absorptions et des émissions de lumière à caractère fortement monochromatiques.

Dans le domaine de l'absorption, certaines terres rares trivalentes permettent l'obtention de colorations très particulières mises à profit dans l'industrie du verre et de la céramique où les terres rares entrent dans la composition des pigments.

Au niveau de l'émission, les applications se sont développées, en liaison avec la disponibilité industrielle des terres rares à des puretés suffisantes : télévision couleur, éclairage fluorescent et radiographie médicale. Une grande variété d'émission peut être obtenue en fonction de la nature de la terre rare mise en jeu et des positions respectives des niveaux d'énergie excités ou fondamentaux. Suivant l'élément de lanthanide choisi, l'émission lumineuse est localisée dans le proche ultraviolet (avec le gadolinium, le cérium), le visible (rouge avec l'europium, orange avec le samarium, vert avec le terbium, jaune avec le dysprosium, bleu avec le thulium), ou le proche infrarouge (avec le néodyme).

Ainsi, en télévision couleur, l'image est reproduite grâce à l'excitation cathodique sélective de trois luminophores (bleu, vert et rouge) à base de lanthanides déposés sur la face interne de l'écran.

Préférentiellement, le composé à base de terre rare luminescente utilisé dans le cadre du procédé selon l'invention sera mis en oeuvre dans le matériau dans des concentrations choisies de façon à permettre l'identification de celui-ci sans trop grever le coût de revient du matériau. En pratique, cette concentration sera avantageusement comprise entre 1 gramme par tonne et 10 grammes par tonne de matrice minérale.

Ces concentrations étant très faibles, ledit composé à base de terre rare luminescente pourra être avantageusement incorporé dans ladite matrice minérale par dilutions successives.

Une autre solution, qui pourra être utilisée lorsque le matériau comprendra au moins un additif tel que par exemple:
- retardateur de prise ;
- accélérateur de prise ;
- fluidifiant ;
- colorant,
consistera à incorporer ledit composé à base d'au moins une terre rare luminescente à au moins l'un de ces additifs, puis à incorporer ce mélange dans ladite matrice minérale.

Selon une variante très intéressante de l'invention, le procédé est utilisé pour marquer au moins deux exemplaires d'un même matériau comprenant une matrice minérale caractérisé en ce qu'il comprend une étape consistant à incorporer dans chacun desdits exemplaires dudit matériau au cours de leur fabrication ou de leur mise en oeuvre, un composé à base d'au moins deux terres rares distinctes dont au moins une est luminiscent selon une concentration le rendant détectable sous irradiation UV, les pourcentages en terres rares du composé étant distincts selon lesdits exemplaires.

On notera que dans un tel procédé, il suffira qu'un des ions de terre rare soit luminescent.

Dans un tel procédé, le composé présentant, selon les exemplaires du matériau, des pourcentages en terres rares différents, présentera aussi une signature spectrophotométrique différente selon ces exemplaires, ce qui permettra de les identifier facilement.

Une telle variante permettra de distinguer les lots d'un matériau présentant la même composition mais fabriqués sur des sites de production différents ou à des dates différentes ou pour des clients différents.

L'invention concerne également tout matériau comprenant au moins une matrice minérale, caractérisé en ce qu'il intègre au moins un traceur luminescent constitué par un composé à base d'au moins une terre rare selon une concentration rendant ce composé détectable sous irradiation UV dans ledit matériau, ledit composé étant un polymère de coordination se présentant sous la forme d'une cristallite obtenu par réaction d'au moins un ion de terre rare luminescent et d'au moins un ligand organique insaturé.

Egalement préférentiellement, ladite terre rare est choisie dans le groupe constitué par l'europium, le terbium, l'holmium, le dysprosium, le thulium, le praséodyme, le néodyme ou l'erbium.

Selon une variante intéressante de l'invention, ledit composé est à base d'au moins une première terre rare luminescente et à base d'au moins une deuxième terre rare luminescente ou non. D'une façon préférée entre toutes, ledit composé est à base d'europium et/ou de terbium. Ces deux terres rares sont celles présentant le meilleur rendement quantique. L'europium émet une lumière rouge et le terbium une lumière verte.

Avantageusement, ledit ligand insaturé est choisi dans le groupe par les ions phthalate, isophthalate, téréphthalate, trimésate, trimellitate, pyromellitate, mellitate,

D'une façon préférentielle, ledit ligand insaturé est l'ion téréphthalate.

D'une façon préférée entre toutes, le composé répond à formule :

Lnₓ Ln'_{y} (C₈O₄H₄)₃(H₂O)₄ avec x+y = 2

dans laquelle, Ln et Ln' identiques ou différents représentent deux ions de terre rare luminescents et C₈O₄H₄ un radical téréphthalate.

Préférentiellement, ledit composé à base d'au moins une terre rare luminescente est inclus dans celui-ci à raison de 1 gramme à 10 grammes par tonne.

Egalement préférentiellement, ladite matrice minérale comprend du sulfate de calcium.

D'autres caractéristiques et avantages de l'invention apparaîtront plus clairement grâce à la description de modes de réalisation de celle-ci donnés en référence aux dessins dans lesquels:
- la figure 1 montre les spectres de luminescence de différentes cristallites monométalliques obtenues avec un ligand téréphthalate utilisables dans le cadre du procédé et des matériaux selon la présente invention ;
- la figure 2 montres les spectres de luminescence de différentes cristallites monométalliques obtenues avec des ligands téréphthalate, pyromellitate et trimésate ;
- la figure 3 montre les spectres de luminescence de différentes cristallites bimétalliques utilisables dans le cadre du procédé et des matériaux selon la présente invention ;
- la figure 4 montre les spectres de luminescence d'une cristallite à base de terbium diluée à différentes concentrations dans une matrice minérale (KBr).

### 1°) Réalisation de cristallites à base de terres rares

Pour la conduite des essais, des composés de formule chimique générale Ln₂[TER]₃.4H₂O ont été réalisés, formule dans laquelle :
- Ln est soit l'europium, soit le terbium, soit le dysprosium, soit l'erbium et
- « TER » représente un radical téréphthalate (benzène-1,4-dicarboxylate).

Ces composés sont des polymères de coordination qui se présentent sous la forme de cristallites.

Ils ont été obtenus par mise en présence directe d'une solution aqueuse d'un sel de terre rare et d'une solution aqueuse d'un sel de l'acide téréphtalique (H₂TER) selon le mode opératoire suivant :
- 1 mmol de chlorure de lanthanide hexahydraté (LnCl₃.6H₂O) est dissoute dans 20 ml d'eau ;
- 1,5 mmol de téréphthalate de sodium (Na₂TER) est dissoute dans 20 ml d'eau ;
- les deux solutions limpides sont mélangées et maintenues sous agitation, à température ambiante, pendant 10 minutes ; la précipitation d'un solide micro-cristallin blanc débute instantanément lors de la mise en présence des deux solutions et se poursuit pendant les 10 minutes d'agitation ;
- le précipité blanc est filtré, lavé à l'eau et séché à l'air.

Les solides obtenus, insolubles dans l'eau et dans la plupart des solvants organiques peuvent être caractérisés par diffraction des rayons X sur poudre. Tous ces composés sont isostructuraux. A titre d'exemple, le solide obtenu avec le terbium cristallise dans le système triclinique (groupe d'espace P-1) avec les paramètres cristallins suivants : a=6.1420(2)Å, b=10.06964(1)Å, c=10.0956(3)Å, α=102.247(2)°, β=91.118(1)°, γ=101.518(2)° et Z=2.

Le rendement de la réaction est de l'ordre de 80%.

Les cristallites obtenues sont de taille homogène sub-micronique et présentent une morphologie de plaquettes.

La résistance chimique de ces composés est bonne également dans la mesure où les ions lanthanides présentent une affinité excellente avec les groupements carboxylates des ligands.

Ainsi, une fois formé, ces composés ne sont pas très sensibles à des lavages par des solutions acides ou basiques.

Ils sont, par ailleurs, stables à l'air plus d'une année.

Ces composés présentent par ailleurs une grande stabilité thermique puisque des tests on montré que leur édifice moléculaire n'était pas détruit à 500°C, c'est-à-dire qu'ils résistent à des températures très supérieures à des températures d'usage.

Ces composés émettent dans le visible sous irradiation ultra-violette. L'émission peut être visible à l'oeil nu ou observé par spectrophotométrie.

Le mécanisme de ce phénomène est connu sous le nom d'effet d'antenne. En effet, l'irradiation dans l'UV s'effectue à 254 nm, par exemple, longueur d'onde d'absorption des systèmes π organiques tels que ceux qui existent dans les ligands de type benzène polycarboxylate.

L'énergie d'excitation est absorbée par le ligand, et transférée par transfert non radiatif à l'ion lanthanide qui se désexcite en émettant dans le visible.

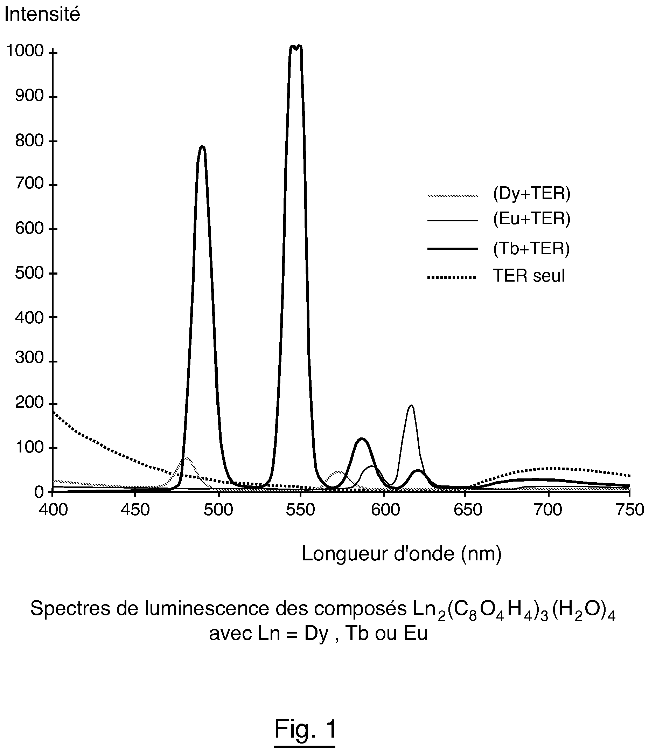

Les spectres de luminescences observés avec les composés de formules Ln₂[TER]₃.4H₂O dans laquelle Ln est soit le dysprosium, soit le terbium soit l'erbium sont représentés à la figure 1.

Les rendements quantiques (φ) des composés de formules Ln₂[TER ]₃.4H₂O dans laquelle Ln est soit l'europium, soit le terbium, soit le dysprosium, soit le terbium ont été déterminés pour les échantillons solides à l'aide d'une sphère d'intégration par la méthode de M. Wrighton dans le tableau I ci-après.

**Tableau I**

| Produits | φ [%] |
|---|---|
| Eu₂TER₃ | (6,7±0,9) |
| Tb₂TER₃ | (19,1±1,0) |
| Dy₂TER₃ | (0,062±0.004) |
| Er₂TER₃ | (0,022±0.001) |

Les composés à base d'ions Tb³⁺ ou Eu³⁺ présentent des rendements quantiques les plus intéressants pour une application industrielle

Selon des modes opératoires similaires à ceux décrit ci-dessus on a également réalisé des composés avec d'autres ligands, à savoir :
l'ion pyromellitate pour obtenir un composé de formules Ln₂(PYRMA)₃.nH₂O, dans laquelle PYRMA représente un radical pyromellitate (benzène-1,2,4,5-tétracarboxylate).

l'ion trimésate pour obtenir un composé de formules Ln₂(TMA)₃.8,5H₂O, dans laquelle TMA représente un radical (benzène-1,3,5-tricarboxylate).

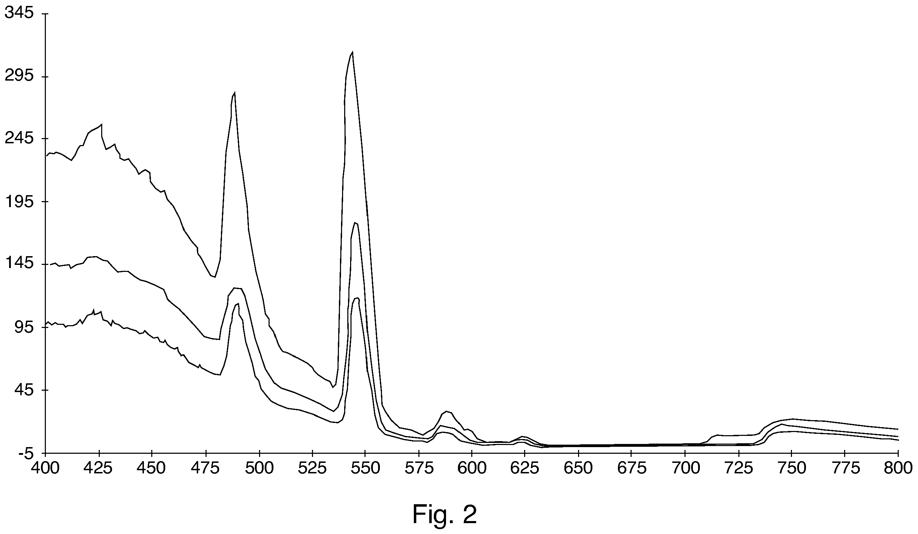

Ces composés présentent des spectres d'émission différents selon les ligands utilisés comme le montre la figure 2.

Enfin, on a également réalisé des cristallites hétéro-bi-métalliques à base d'europium et de terbium et de téréphthalate, de formule chimique générale :

Tbₓ Eu_{y} (C₈O₄H₄)₃(H₂O)₄

avec x+y = 2

Lors de la synthèse de ces composés bi-métalliques, on a utilisé un mode opératoire semblable à celui décrit ci dessus pour les composés monométalliques mais en faisant varier les rapports molaires des sels de terres utilisés afin d'obtenir des cristallites montrant des proportions variables d'europium et de terbium.

Compte tenu des faibles concentrations dans lesquelles les cristallites sont utilisées dans le cadre du procédé selon l'invention, il a été vérifié que chaque cristallite contient les mêmes proportions relatives de Tb et d'Eu que la poudre globale. Il est en effet important que chaque cristallite renferme l'ensemble de l'information. Ceci a été vérifié par micro-analyse à l'aide d'un MEB. Les résultats de cette analyse figurent dans le tableau 2 ci-dessous et confirment de façon non ambiguë qu'il est possible de fabriquer des poudres dans lesquelles les proportions relatives en Tb et Eu sont parfaitement contrôlables à l'échelle de la cristallite.

**Tableau 2**

| **Pourcentage molaires des solutions de départ** | | **Analyse des cristallites par microscopie à balayage** | |
|---|---|---|---|
| % Terbium | % Europium | % Terbium | % Europium |
| 10 | 90 | 12,56 | 87,44 |
| 20 | 80 | 20,36 | 79,64 |
| 30 | 70 | 28,35 | 71,65 |
| 40 | 60 | 39,11 | 60,89 |
| 50 | 50 | 50,58 | 49,42 |
| 60 | 40 | 60,22 | 39,78 |
| 80 | 20 | 80,56 | 19,44 |
| 90 | 10 | 89,83 | 10,17 |

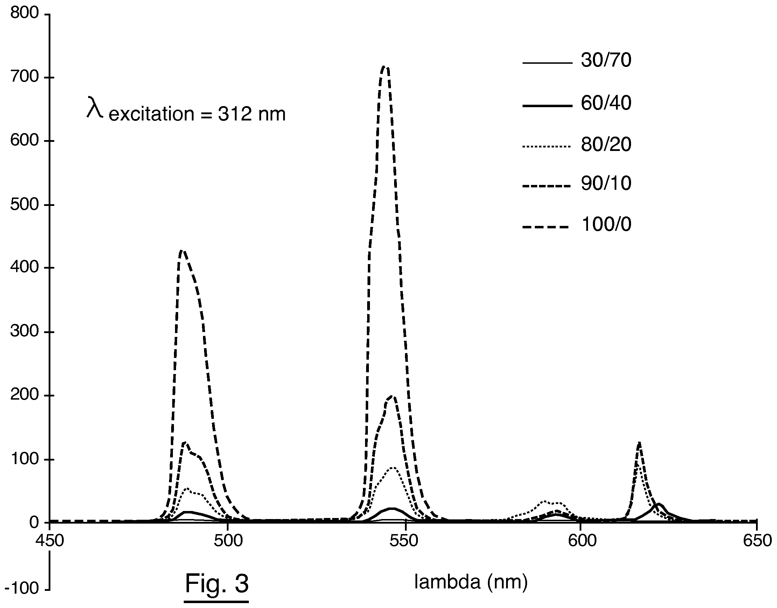

En fonction des pourcentages relatifs de chacune des terres rares dans les cristallites, on observe, à l'oeil nu comme au fluorimètre, une variation chromatique. Ceci est confirmé par la figure 3 qui montre des spectres de fluorescence obtenus avec ces différents composés.

### 2°) Matériaux à base de matrices minérales intégrant le composés à base de terres

Les composés réalisés précédemment, ont été inclus, à différentes concentrations, dans une matrice minérale, à savoir du plâtre. Le plâtre est en effet une matrice minérale classiquement utilisée dans la réalisation de matériaux, le cas échant avec des additifs (retardateur de prise, accélérateur de prise, fluidifiant, colorant). Le mélange de plâtre et de cristallite a ensuite été gâché. Un taux de gâchage de 0.8 (proportion massique eau/mélange de poudre) a été utilisé.

Il a d'abord vérifié que le composé ne s'altère pas au cours du gâchage. Pour cela, du plâtre sec additionné de 2,5% en poids de composé de formule Tb₂TER.₃.4H₂O a été broyé et analysé par diffraction des rayons X sur poudre (compte tenu de la précision de cette technique, une concentration beaucoup plus élevée que la concentration utilisée en pratique dans les matériaux a du être utilisée). L'analyse par diffraction des rayons X a démontré que le composé Tb₂TER₃.4H₂O était bien présent après gâchage et séchage du plâtre.

La luminescence des cristallites dans la matrice minérale a ensuite été étudiée pour différentes concentrations de cristallites, à l'aide d'une lampe UV émettant à 254nm. Les résultats sont donnés dans le tableau 3, ci-après.

**Tableau 3**

| Teneur massique en traceur | Luminescence observée à l'oeil nu sous irradiation UV (254nm) | |
|---|---|---|
| | Avant gâchage | Après prise |
| 5 % | Oui | Oui |
| 0.5 % | Oui | Oui |
| 0.1 % | Oui | Oui |
| 0.05 % | Oui | Oui |
| 0.01 % | Oui | Oui |
| 50 ppm | Oui | Oui |
| 10 ppm | Oui | Oui |
| 5 ppm | Oui | Oui |
| 1 ppm | Oui | Oui |
| 0.5 ppm | Oui | Oui |
| 0.1 ppm | Non | Oui |
| 0.05 ppm | Non | Oui |

Ces résultats, confirmés par analyse par fluorimétrie, indiquent une visibilité à l'oeil nu du traceur dans le matériau après gâchage même à des faibles teneurs pondérales de celui-ci dans la matrice. Ceci rend ces composés économiquement intéressants malgré leur coût relativement élevé.

Des essais sur la luminescence du traceur de formule Tb₂(C₈H₄O₄)₃.4H₂O selon l'invention dans une autre matrice minérale, à savoir le KBr ont également été conduits.

Le composé a été dilué dans le KBr sec à raisons de diverses concentration allant de 1 partie de composé à base de terbium pour 10 parties de KBr à 1 partie de composé à base de terbium pour 100000 parties de KBr.

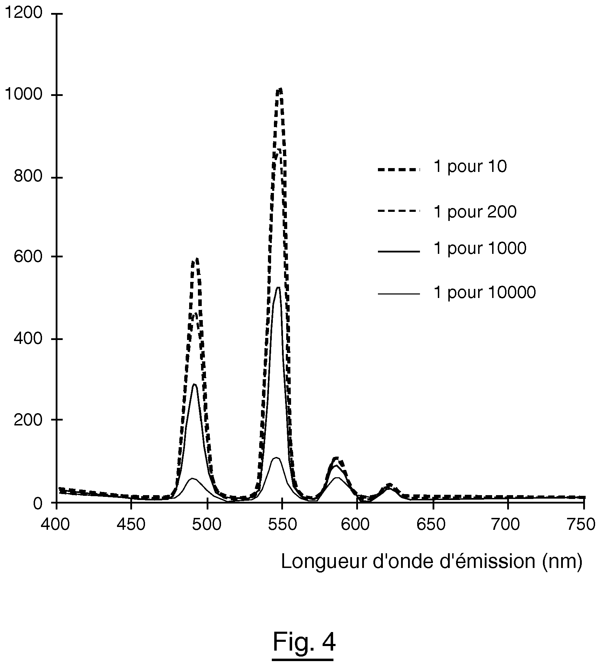

Les courbes de fluorimétrie (λ_{exc}=300nm) correspondant à ces diverses dilutions sont rapportées dans le graphe de la figure 4.

D'autres essais ont été effectués avec les cristallites de formule Ln₂[PYRMA]₃.nH₂O etLn₂[TMA]₃.8.5H₂O ont été effectués. Les résultats obtenus sont comparables à ceux obtenus avec les composées réalisés à partir du ligand térephthalate.

Enfin d'autres essais ont été effectués en utilisant les cristallites hétéro bimétalliques pour marquer différents lots d'un même matériaux.

L'analyse spectrophotométrique de l'émission de ces composés bimétalliques contenus dans ces différents lots montre une réponse variable selon les concentrations relatives de lanthanides dans les cristallites.

De tels composés bimétalliques peuvent être utilisés pour marquer de façon distinctives différents exemplaires du même matériau ce qui présente un intérêt notamment dans le marquage de différents lots du même matériau, dans le marquage de ce matériau en fonction du client auquel il est vendu, dans le marquage de ce matériau en fonction de sa date de fabrication (millésimage), dans le marquage de ce matériau pour détecter la copie de celui-ci etc...

## Revendications

1. Procédé de marquage d'au moins un matériau comprenant une matrice minérale **caractérisé en ce qu'**il comprend au moins une étape consistant à y incorporer au cours de sa fabrication au moins un composé à base d'au moins une terre rare luminescente selon une concentration rendant ce composé détectable sous irradiation UV dans ledit matériau, ledit composé étant un polymère de coordination se présentant sous la forme d'une cristallite obtenue par réaction d'au moins un ion de terre rare luminescent avec au moins un ligand organique insaturé.

2. Procédé de marquage selon la revendication 1 **caractérisé en ce que** ladite concentration est comprise entre 1 gramme par tonne et 10 grammes par tonne de matrice minérale.

3. Procédé de marquage selon la revendication 2 **caractérisé en ce que** ledit composé à base de terre rare luminescente est incorporé dans ladite matrice minérale par dilutions successives.

4. Procédé de marquage selon l'une quelconque des revendications 1 à 3 **caractérisé en ce que** ledit matériau comprend au moins un additif appartenant au groupe suivant :
- retardateur de prise ;
- accélérateur de prise ;
- fluidifiant ;
- colorant,
et **en ce qu'**il consiste à incorporer ledit composé à base d'au moins une terre rare luminescente à au moins l'un de ses additifs, puis à incorporer ce mélange dans ladite matrice minérale.

5. Procédé de marquage selon l'une quelconque des revendications 1 à 4 au moins deux exemplaires d'un même matériau comprenant une matrice minérale **caractérisé en ce qu'**il comprend une étape consistant à incorporer dans chacun desdits exemplaires dudit matériau au cours de leur fabrication ou de leur mise en oeuvre, un composé à base d'au moins deux terres rares distincts dont au moins un est luminescent selon une concentration le rendant détectable sous irradiation UV, les pourcentages en terres rares du composé étant distincts selon lesdits exemplaires.

6. Matériau à base d'une matrice minérale **caractérisé en ce qu'**il intègre au moins un traceur luminescent constitué par un composé à base d'au moins un ion de terre rare luminescent selon une concentration rendant ce composé détectable sous irradiation UV, ledit composé étant un polymère de coordination se présentant sous la forme d'une cristallite obtenue par réaction d'au moins un ion de terre rare luminescent avec au moins un ligand organique insaturé.

7. Matériau selon la revendication 6 **caractérisé en ce que** ladite terre rare est choisie dans le groupe constitué par l'europium, le terbium, l'holmium, le dysprosium, le thulium, le praséodyme, le néodyme ou l'erbium.

8. Matériau selon la revendication 6 ou 7 **caractérisé en ce que** ledit composé est à base d'au moins une première terre rare luminescente et à base d'au moins une deuxième terre rare luminescent ou non.

9. Matériau selon la revendication 7 ou 8 **caractérisé en ce que** ledit composé est à base d'europium et/ou de terbium.

10. Matériau selon l'une quelconque des revendications 6 à 9 **caractérisé en ce que** ledit ligand insaturé est choisi dans le groupe par les ions phthalate, isophthalate, téréphthalate, trimésate, trimellitate, pyromellitate, mellitate,

11. Matériau selon la revendication 10 **caractérisé en ce que** ledit ligand insaturé est l'ion téréphthalate.

12. Matériau selon la revendication 11 **caractérisé en ce que** ledit composé répond à formule :
Lnₓ Ln'_{y} (C₈O₄H)₃(H₂O)₄
avec x+y = 2
dans laquelle, Ln et Ln' identiques ou différents représentent deux ions lanthanides ou ions de terre rare luminescents et C₈O₄H₄ un radical téréphthalate.

13. Matériau selon l'une quelconque des revendications 6 à 12, **caractérisé en ce que** ledit composé à base d'au moins une terre rare luminescente est inclus dans celui-ci à raison de 1 gramme à 10 grammes par tonne.

14. Matériau selon l'une quelconque des revendications 6 et 13, **caractérisé en ce que** ladite matrice minérale comprend du sulfate de calcium.

15. Matériau selon l'une quelconque des revendications 6 à 14, **caractérisé en ce qu'**il comprend au moins un additif appartenant au groupe suivant :
- retardateur de prise ;
- accélérateur de prise ;
- fluidifiant ;
- colorant.

16. Matériau selon l'une quelconque des revendications 6 à 15, **caractérisé en ce qu'**il constitue un matériau anti-feu.

## Patentansprüche

1. Verfahren zum Markieren von mindestens einem Material mit einer anorganischen Matrix, **dadurch gekennzeichnet, dass** es mindestens einen Schritt umfasst, der darin besteht, während der Herstellung des Materials mindestens eine Verbindung auf der Grundlage von mindestens einer lumineszierenden seltenen Erde zuzufügen, mit einer Konzentration, welche diese Verbindung unter UV Bestrahlung im besagten Material sichtbar macht, wobei die besagte Verbindung ein Koordinierungspolymer ist, das in Form eines Kristallits auftritt, der durch Reaktion von mindestens einem Ion einer lumineszierenden seltenen Erde mit mindestens einem nicht gesättigten organischen Ligand entsteht.

2. Verfahren zum Markieren nach Anspruch 1, **dadurch gekennzeichnet, dass** die besagte Konzentration zwischen einem Gramm je Tonne und 10 Gramm je Tonne anorganischer Matrix liegt.

3. Verfahren zum Markieren nach Anspruch 2, **dadurch gekennzeichnet, dass** die besagte Verbindung auf der Grundlage einer lumineszierenden seltenen Erde mittels aufeinanderfolgender Verdünnungen zugefügt wird.

4. Verfahren zum Markieren nach einem der Ansprüche 1 bis 3, **dadurch gekennzeichnet, dass** das besagte Material mindestens einen Zusatz aus der folgenden Gruppe enthält:
- Abbindeverzögerer;
- Abbindebeschleuniger;
- Verdünner;
- Färbungsmittel.
und dadurch, dass es darin besteht, die besagte Verbindung auf der Grundlage mindestens einer lumineszierenden seltenen Erde in mindestens einem der Zusatzstoffe einzufügen und dann dieses Gemisch der besagten anorganischen Matrix zuzufügen.

5. Verfahren zum Markieren nach einem der Ansprüche 1 bis 4 von mindestens zwei Proben eines selben Materials, das eine anorganische Matrix umfasst, **dadurch gekennzeichnet, dass** es einen Schritt aufweist, der darin besteht, in jeder der besagten Proben des besagten Materials während der Herstellung oder der Anwendung desselben, eine Verbindung auf der Grundlage von mindestens zwei verschiedenen seltenen Erden zuzufügen, wobei mindestens eine dieser seltenen Erden lumineszent ist, mit einer Konzentration, die sie unter UV Bestrahlung nachweisbar macht, wobei die Prozentsätze seltener Erden der Verbindung für jede der besagten Proben verschieden sind.

6. Material auf der Grundlage einer anorganischen Matrix, **dadurch gekennzeichnet, dass** es mindestens einen leuchtenden Tracer umfasst, der aus einer Verbindung auf der Grundlage von mindestens einem Ion einer lumineszierenden seltenen Erde besteht, mit einer Konzentration, welche die Verbindung unter UV Strahlung nachweisbar macht, wobei die besagte Verbindung ein Koordinationspolymer ist, das in Form eines Kristallits auftritt, der durch Reaktion von mindestens einem Ion einer lumineszierenden seltenen Erde mit mindestens einem nicht gesättigten organischen Ligand entsteht.

7. Material nach Anspruch 6, **dadurch gekennzeichnet, dass** die besagte seltene Erde aus der folgenden Gruppe gewählt wird: Europium, Terbium, Holmium, Dysprosium, Thulium, Praseodym, Neodym oder Erbium.

8. Material nach einem der Ansprüche 6 oder 7, **dadurch gekennzeichnet, dass** die besagte Verbindung auf der Grundlage von mindestens einer ersten lumineszierenden seltenen Erde und von mindestens einer zweiten seltenen Erde beruht, wobei die zweite seltene Erde lumineszierend sein kann oder nicht.

9. Material nach einem der Ansprüche 7 oder 8, **dadurch gekennzeichnet, dass** die besagte Verbindung auf der Grundlage von Europium und/oder Terbium beruht.

10. Material nach einem der Ansprüche 6 bis 9, **dadurch gekennzeichnet, dass** der besagte nicht gesättigte Ligand aus der Gruppe der folgenden Ionen gewählt wird; Phthalate, Isophthalate, Terephthalate, Trimesate, Trimellitate, Pyromellitate, Mellitate.

11. Material nach Anspruch 10, **dadurch gekennzeichnet, dass** es sich beim besagten nicht gesättigten Ligand um das Terephthalation handelt.

12. Material nach Anspruch 11, **dadurch gekennzeichnet, dass** die besagte Verbindung der Formel entspricht:
Lnₓ Ln'_{y} (C₈O₄H₄)₃(H₂O)₄
mit x+y = 2,
wobei Ln und Ln' identisch oder verschieden sein können und zwei Lanthanoidionen oder lumineszierende seltene Erdionen und C₈O₄H₄ ein Terephthalatradikal darstellen.

13. Material nach einem der Ansprüche 6 bis 12, **dadurch gekennzeichnet, dass** die besagte Verbindung auf der Grundlage von mindestens einer lumineszierenden seltenen Erde im Material eingefügt ist mit einer Konzentration von 1 Gramm bis 10 Gramm je Tonne.

14. Material nach einem der Ansprüche 6 bis 13, **dadurch gekennzeichnet, dass** die besagte anorganische Matrix Kalziumsulfat enthält.

15. Material nach einem der Ansprüche 6 bis 14, **dadurch gekennzeichnet, dass** es mindestens einen Zusatz aus der folgenden Gruppe enthält:
- Abbindeverzögerer;
- Abbindebeschleuniger;
- Verdünner;
- Färbungsmittel.

16. Material nach einem der Ansprüche 6 bis 15, **dadurch gekennzeichnet, dass** es einen feuerhemmenden Stoff bildet.

## Claims

1. Method for labelling at least one material comprising a mineral matrix **characterised in that** it comprises at least one step consisting in incorporating therein during the manufacture thereof at least one compound based on at least one luminescent lanthanide according to a concentration making said compound detectable under UV irradiation in said material, said compound being a coordination polymer in the form of a crystallite obtained by reacting at least one luminescent lanthanide ion with at least one unsaturated organic ligand.

2. Labelling method according to claim 1 **characterised in that** said concentration is between 1 gram per tonne and 10 grams per tonne of mineral matrix.

3. Labelling method according to claim 2 **characterised in that** said compound based on luminescent lanthanide or luminescent rare earth is advantageously incorporated in said mineral matrix by successive dilutions.

4. Labelling method according to any of claims 1 to 3, **characterised in that** said material comprises at least one additive belonging to the following group:
- setting retarding agent;
- setting accelerator;
- liquefier;
- colorant,
and **in that** it consists in incorporating said compound based on at least one luminescent lanthanide with at least one of said additives, and incorporating said mixture in said mineral matrix.

5. Labelling method according to any of claims 1 to 4 for at least two samples of the same material comprising a mineral matrix **characterised in that** it comprises a step consisting in incorporating in each of said samples of said material during the manufacture or implementation thereof, a compound based on at least two distinct lanthanides wherein at least one is luminescent according to a concentration making it detectable under UV irradiation, the lanthanide percentages of the compound being distinct according to said samples.

6. Material based on a mineral matrix **characterised in that** it incorporates at least one luminescent marker consisting of a compound based on at least one luminescent lanthanide ion according to a concentration making said compound detectable under UV irradiation in said material, said compound being a coordination polymer in the form of a crystallite obtained by reacting at least one luminescent lanthanide ion and at least one unsaturated organic ligand.

7. Material according to claim 6 **characterised in that** said lanthanide is selected in the group consisting of europium, terbium, homium, dysprosium, thulium, praseodymium, neodymium or erbium.

8. Material according to claim 6 or 7 **characterised in that** said compound is based on at least one first luminescent lanthanide and based on at least one second luminescent or non-luminescent lanthanide or yttrium.

9. Material according to claim 7 or 8 **characterised in that** said compound is based on europium and/or terbium.

10. Material according to any of claims 6 to 9 **characterised in that** said unsaturated ligand is selected in the group consisting of phthalate, isophthalate, terephthalate, trimesate, trimellitate, pyromellitate, mellitate.

11. Material according to claim 10 **characterised in that** said unsaturated ligand is the terephthalate ion.

12. Material according to claim 11 **characterised in that** said compound complies with the formula:
Lnₓ Ln'_{y} (C₈O₄H₄)₃(H₂O)₄
where x+y = 2
wherein, Ln and Ln', identical or different, represent two luminescent lanthanide ions and C₈O₄H₄ a terephthalate radical.

13. Material according to any of claims 6 to 12, **characterised in that** said compound based on at least one luminescent lanthanide is included therein at a rate of 1 gram to 10 grams per tonne.

14. Material according to any of claims 6 to 13, **characterised in that** said mineral matrix comprises calcium sulphate.

15. Material according to any of claims 6 to 14, **characterised in that** it comprises at least one additive such as for example:
- setting retarding agent;
- setting accelerator;
- liquefier;
- colorant.

16. Material according to any of claims 6 to 15, **characterised in that** it consists of a fireproofing material.
